# EUROPÄISCHE PATENTSCHRIFT

(11) **EP 1 428 175 B1**
(45) Veröffentlichungstag und Bekanntmachung des Hinweises auf die Patenterteilung: **10.08.2005**
(21) Anmeldenummer: 02777015.5
(22) Anmeldetag: 06.09.2002
(51) Int. Cl.: G06K 19/16, G06K 7/10

(54) **ETIKETT MIT EINEM DIFFRAKTIVEN STRICHCODE UND LESEANORDNUNG FÜR SOLCHE ETIKETTEN**
LABEL WITH A DIFFRACTIVE BARCODE AND READING ARRANGEMENT FOR SUCH LABELS
ETIQUETTE MUNIE D'UN CODE-BARRES DIFFRACTIF ET SYSTEME DE LECTURE POUR DE TELLES ETIQUETTES

(30) Priorität: 21.09.2001 DE 10146508
(43) Veröffentlichungstag der Anmeldung: 16.06.2004
(73) Patentinhaber: OVD Kinegram AG, 6301 Zug (CH)
(72) Erfinder: STAUB, René, CH-6332 Hagendorn (CH); TOMPKIN, Wayne, Robert, CH-5400 Baden (CH); SCHILLING, Andreas, CH-6332 Hagendorn (CH); GEHR, Peter, CH-6340 Baar (CH)
(74) Vertreter: Zinsinger, Norbert
(86) Internationale Anmeldenummer: PCT/EP2002/009985
(87) Internationale Veröffentlichungsnummer: WO 2003/027952

(56) Entgegenhaltungen:
- EP-A- 0 590 826
- WO-A-01/80175
- WO-A-98/10324
- WO-A-98/37514
- US-A- 5 032 003

## Beschreibung

Die Erfindung bezieht sich auf ein Etikett mit einem diffraktiven Strichkode gemäss Anspruch 1 sowie auf eine Leseanordnung zur Erkennung von Information auf solchen Etiketten gemäss Anspruch 14.

Solche Etiketten werden zur Kennzeichnung von Waren, Ausweisen oder Wertpapieren verwendet und tragen eine numerische Information über die Ware, den Ausweis oder das Wertpapier. Der Strichkode der Etiketten werden mit optischen Mitteln ausgelesen und zeichnen sich durch eine gute maschinelle Lesbarkeit der im Strichkode enthaltenen Information aus.

Es sind verschiedene Strichkodearten bekannt, wie z.B. nach MIL-STD-1189 oder nach dem "European Article Numbering Code", bei denen eine Information in der Anordnung von verschieden breiten Strichelementen und Zwischenräumen enthalten ist. Mittels eines einfachen Druckverfahrens werden die Strichelemente in einer zu den Zwischenräumen kontrastierenden Farbe auf einen Träger, üblicherweise Papier, aufgebracht. Lesegeräte sind im Handel erhältlich, die solche Strichkode ablesen können.

Nach US 5,900,954 kann die Sicherheit des Strichkodes gegen Fälschen erhöht werden, indem der Strichkode auf einen Träger mit einem Hologramm aufgedruckt wird. Der Strichkode erstreckt sich ganz oder wenigstens teilweise über das Hologramm.

In der EP 0 366 858 A1 sind verschiedene Ausführungen von diffraktiven Strichkode beschrieben, die anstelle von gedruckten Strichelementen Flächenelemente mit Beugungsgittern aufweisen. Im Vergleich zu den drucktechnisch erzeugten Strichkode weisen die diffraktiven Strichkode eine grosse Fälschungssicherheit auf. Allerdings wird der Vorteil der grossen Fälschungssicherheit mit einer im Vergleich zu den drucktechnisch erzeugten Strichkode geringen Toleranz in Bezug auf die Ausrichtung des diffraktiven Strichkodes zum Lesestrahl der Leseanordnung und mit einer Beschränkung des Abstands zwischen dem Lesegerät und dem Etikett auf wenige Zentimeter erkauft. Des weiteren ist der drucktechnisch einzeln erzeugte Strichkode mit einer individuellen Information äusserst kostengünstig, während die diffraktiven Strichkode mit vertretbaren Kosten rationell nur in grossen Mengen mit identischer Information herstellbar sind.

Aus der WO 01/80175 veröffentlicht am 25.10.2001 ist ein Flächenmuster bekannt, dessen lichtbeugende Flächenteile mit mikroskopisch feinen Reliefstrukturen bedeckt sind. Wenigstens in einem Areal dieses Flächenmuster weisen die mikroskopisch feinen Reliefstrukturen sehr hohe Spatialfrequenzen, z.B. 2'630 Linien pro Millimeter, und eine modulierte Profilhöhe der Reliefstruktur auf. Diese Reliefstrukturen beugen das einfallende Licht nur in die nullte Beugungsordnung und verhalten sich daher wie farbige Spiegel, wobei das reflektierte Licht eine von der Profilhöhe und dem Einfallswinkel des Lichts auf die Reliefstruktur abhängige Mischfarbe aufweist Die Profilhöhe ändert sich entsprechend der modulierenden Hüllkurve so langsam, dass das Auge Zonen mit unterschiedlicher Mischfarbe erkennen kann. Die Reliefstrukturen haben eine stark polarisierende Wirkung. Durch unterschiedlich polarisierende Flächenteile kann das zurückgestreute, polarisierte Licht einen Strichcode bilden, der nur mit Hilfe von Polarisationsfiltern erkennbar ist.

Mosaikartig angeordnete Flächen mit in Kunststoff eingeprägten, mikroskopisch feinen Beugungsstrukturen sind z.B. aus EP-0 105 099 B1 und EP 0 375 833 B1 bekannt. Ausführungen von Sicherheitsetiketten mit beugungsoptisch wirksamen Strukturen und die dazu verwendbaren Materialien sind in der US 4,856,857 zusammengestellt.

Aus DE-OS 1 957 475 und CH 653 782 ist eine weitere Familie von beugungsoptisch wirksamen, mikroskopisch feinen Reliefstrukturen unter dem Namen Kinoform bekannt. Nur bei einer Beleuchtung der Kinoform mit im wesentlichen kohärenten Licht wird das Licht von der Kinoform asymmetrisch in einen einzigen, durch die Reliefstruktur des Kinoforms vorbestimmten Raumwinkel abgelenkt.

Der Erfindung liegt die Aufgabe zugrunde, ein kostengünstiges, optisch maschinell auslesbares Etikett mit wenigstens einem diffraktiven Strichcode zu schaffen, der aus einer Distanz von mehreren Dezimetern mit handelsüblichen Lesegeräten auslesbar ist.

Die genannte Aufgabe wird erfindungsgemäss durch die Merkmale des Anspruchs 1 gelöst. Vorteilhafte Ausgestaltungen der Erfindung ergeben sich aus den abhängigen Ansprüchen.

Ausführungsbeispiele der Erfindung sind in der Zeichnung dargestellt und werden im folgenden näher beschrieben.

Es zeigen:
- Figur 1: ein Etikett mit einem diffraktiven Strichcode,
- Figur 2: einen Querschnitt durch das Etikett,
- Figur 3: einen vergrösserten Ausschnitt aus der Figur 2,
- Figur 4: ein Diagramm,
- Figur 5: den diffraktiven Strichcode,
- Figur 6: zwei parallele Strichcode,
- Figur 7a, 7b: verschachtelte Strichcode,
- Figur 8: eine erste Leseanordnung und
- Figur 9: eine zweite Leseanordnung.

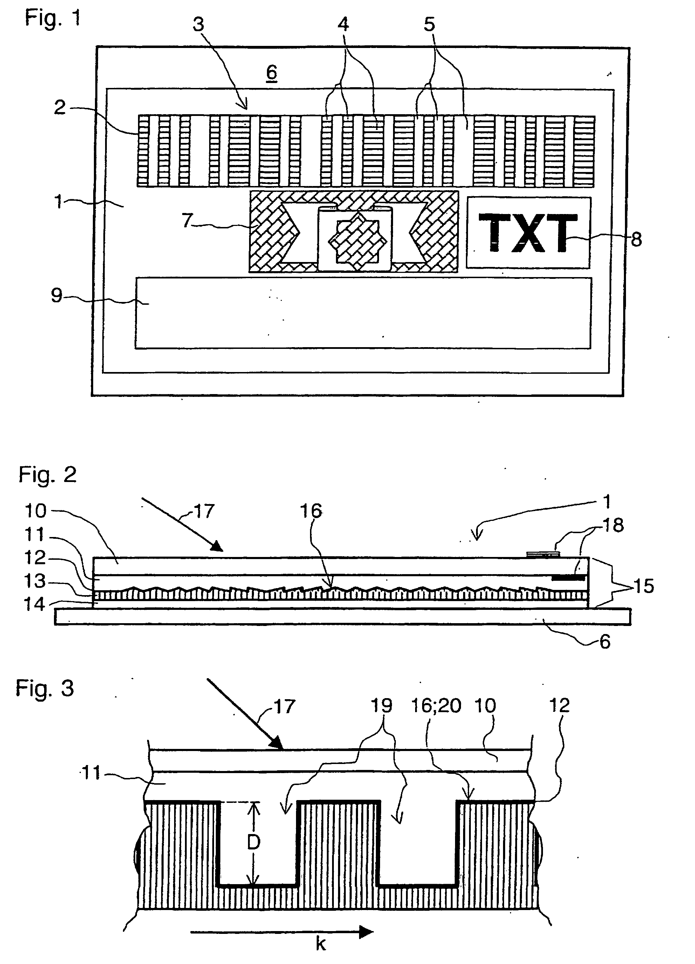

In der Figur 1 bedeuten 1 ein Etikett, 2 ein Areal mit einem diffraktiven Strichcode 3, 4 Felder und 5 Zwischenflächen des Strichcodes 3. Die Felder 4 und die Zwischenflächen 5 sind rechteckige Balken, die sich mit ihren Längsseiten berührend, quer im Areal 2 angeordnet sind. Jeweils zwei aufeinanderfolgende Felder 4 sind durch eine Zwischenfläche 5 getrennt, wobei in der Abfolge der Felder 4 und der Zwischenflächen 5 von unterschiedlicher Breite eine Information kodiert ist. Wenigstens die Felder 4 weisen eine im Etikett 1 eingebettete Beugungsstruktur auf. Die Zwischenflächen 5 sind beispielsweise als spiegelnde oder absorbierende Balken ausgeführt. In einer anderen Ausführung weisen auch die Zwischenflächen 5 Beugungsstrukturen auf, deren Azimut sich vom Azimut der Beugungsstruktur in den Feldern 4 wenigstens um ± 20° modulo 180° unterscheidet. Mit Vorteil sind alle Felder 4 bzw. alle Zwischenflächen 5 mit der gleichen optisch wirksamen Struktur belegt. Das Etikett 1 ist z.B. an einem Gegenstand 6 befestigt und enthält im Strichcode 3 eine Information über den Gegenstand 6. Der Gegenstand 6 kann ein Dokument, ein Blatt Papier, ein Aufkleber oder ein dreidimensionaler Körper usw. sein. Entsprechend dem Verwendungszweck sind auf der restlichen Fläche des Etiketts 1 Embleme 7, Ziffern oder Buchstaben 8, die dem visuellen Erkennen der Herkunft des Etiketts 1 dienen, untergebracht. Diese Informationen können drucktechnisch aufgebracht sein oder aber in Form eines der aus den eingangs erwähnten EP 0 105 099 B1 und EP 0 375 833 B1 bekannten diffraktiven Flächenmuster ausgeführt sein, deren Beugungsstrukturen gleichfalls im Etikett 1 eingebettet sind. In einer anderen Ausführung des Etiketts 1 ist auch Platz für ein zusätzliches Strichcodefeld 9 vorgesehen, in dem ein drucktechnisch erzeugter weiterer Strichcode oder ein weiterer diffraktiver Strichcode angeordnet ist. Das Strichcodefeld 9 ist mit Vorteil parallel zum Areal 2 ausgerichtet, damit dasselbe Lesegerät den weiteren Strichcode aus dem Strichcodefeld 9 und den diffraktiven Strichcode 3 aus dem Areal 2 maschinell auslesen kann.

Die Figur 2 zeigt das Etikett 1 im Querschnitt. Das Etikett 1 ist ein aus mehreren Schichten 10 bis 14 bestehender Schichtverbund 15, der einerseits durch eine Deckschicht 10 und andererseits durch eine Kleberschicht 14 begrenzt ist. Unter der Deckschicht 10 folgen in der angegebenen Reihenfolge eine Prägeschicht 11, eine Reflexionsschicht 12, eine Schutzschicht 13 und die Klebeschicht 14. Für wenigstens eine Wellenlänge von auf das Etikett 1 einfallendem Licht 17 sind wenigstens die Deckschicht 10 und die Prägeschicht 11 transparent. In die Prägeschicht 11 sind mikroskopisch feine Reliefstrukturen 16 abgeformt, die das, z.B. sichtbare, einfallende Licht 17 beugen. Die weniger als 100 nm starke Reflexionsschicht 12 deckt die mikroskopisch feinen Reliefstrukturen 16 formgetreu ab. Die Schutzschicht 13 verfüllt die Vertiefungen der Reliefstrukturen 16 und überdeckt die strukturierte Reflexionsschicht 12. Die Klebeschicht 14 ermöglicht eine sichere Verbindung zwischen dem Gegenstand 6 und dem Schichtverbund 15.

Verschiedene Ausführungen des Schichtverbunds 15 und der für die Herstellung geeigneten Materialien sind in den Tabellen 1 bis 6 der eingangs erwähnten US 4,856,857 zusammengestellt. Drucktechnisch aufgebrachte Indicia 18 sind wenigstens auf einer der Schichten 10 bis 14 des Schichtverbunds 15 mit einer Licht absorbierenden Farbe aufgebracht. In einer Ausführung sind die Etiketten 1 mit einem drucktechnisch auf der Deckschicht 10 in Form von Indicia 18 erzeugten weiteren Strichcode im Strichcodefeld 9 (Fig. 1) individualisiert bzw. in der Reihenfolge der Herstellung numeriert.

In der Figur 3 ist beispielhaft ein Rechteckprofil eines ebenen Beugungsgitters im Schnitt quer zu Furchen 19 des Rechteckprofils dargestellt. Der Gittervektor k liegt daher in der Zeichnungsebene. Das Rechteckprofil weist eine geometrische Profiltiefe D auf. Da das Licht 17 durch die Deckschicht 10 und die Prägeschicht 11 hindurch auf das durch die Reflexionsschicht 12 gebildete Beugungsgitter fällt, sind die Furchen 19 mit dem Material der Prägeschicht 11 verfüllt. Anstelle der geometrischen Profiltiefe D wird die optische Profiltiefe d = D•n wirksam, wobei n die Brechzahl des Materials der Prägeschicht 11 ist. Das Rechteckprofil ist nur der Einfachheit halber anstelle der nachstehend beschriebenen diffraktiven Reliefstruktur 16 (Beugungsstruktur) gezeichnet.

Weist die Beugungsstruktur mehr als 2300 Linien pro Millimeter auf, wird das senkrecht und unpolarisiert einfallende Licht 17 aus dem sichtbaren Bereich des Spektrums nur in die nullte Ordnung gebeugt. Für das schief auf die Beugungsstruktur einfallende Licht 17 ist die Liniendichte entsprechend zu erhöhen, z.B. auf einen Wert von 2800 Linien pro Millimeter bis 3000 Linien pro Millimeter. Wie bei einem ebenen Spiegel ist der Winkel zwischen dem einfallenden Licht 17 und der Normalen auf die Ebene der Beugungsstruktur gleich wie der Winkel zwischen dem gebeugten Licht und der Normalen. Solche Beugungsstrukturen werden nachstehend Beugungsstruktur nullter Ordnung genannt. Bei einer Beleuchtung mit weissem Tageslicht weist im Unterschied zum ebenen Spiegel das an der Beugungsstruktur nullter Ordnung gebeugte Licht Lücken im sichtbaren Teil des Spektrums auf, so dass die Beugungsstruktur nullter Ordnung wie ein farbig reflektierender Spiegel wirkt.

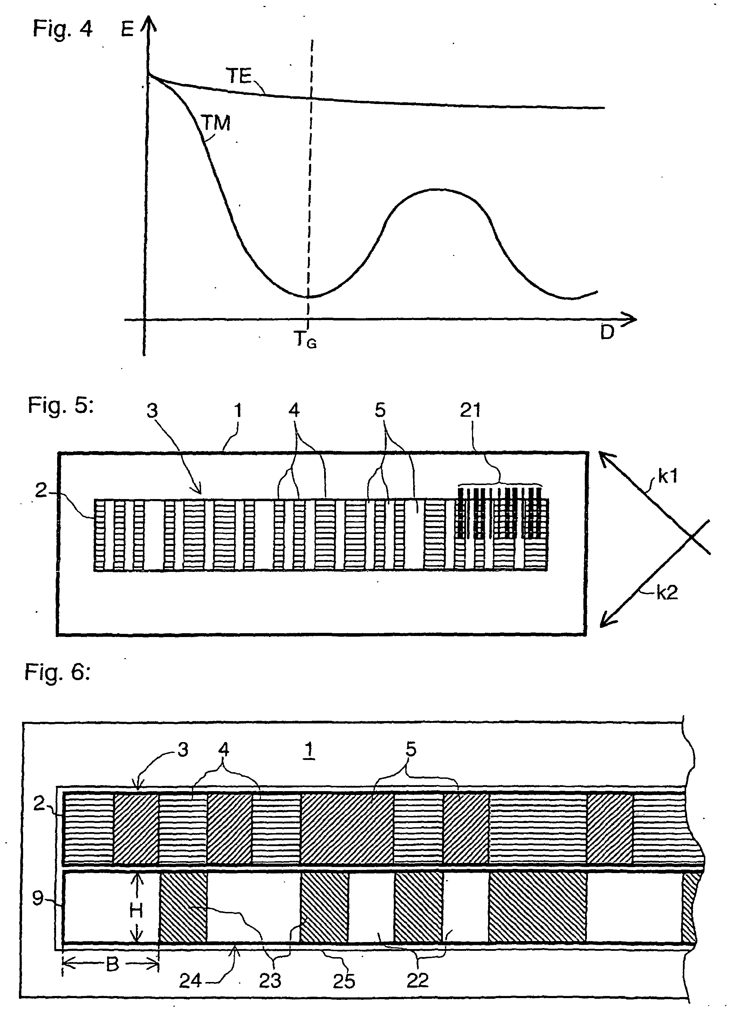

Die Figur 4 zeigt ein Diagramm für die Beugungseffizienz E der ebenen Beugungsstruktur für TE und TM polarisiertes Licht in Abhängigkeit von der optischen Profiltiefe d = D, wobei die Brechzahl n = 1 ist. Das TE polarisierte Licht wird mit hoher Effizienz E praktisch unabhängig von der Profiltiefe D gebeugt. Im Gegensatz dazu ist die Beugungseffizienz E für das TM polarisierte Licht stark von der Profiltiefe D abhängig, wobei die Beugungseffizienz E für das TM polarisierte Licht mit zunehmender Profiltiefe D zu einem ersten Minimum schnell absinkt. Liegen die Richtung des unpolarisiert einfallenden Lichts 17 und der Gittervektor k (Fig. 3) der Beugungsstruktur in einer Ebene, so schwingt der elektrische Feldvektor des p - polarisierten Lichts parallel zu dieser Ebene, während der elektrische Feldvektor des s - polarisierten Lichts senkrecht dazu schwingt. Die für den Strichcode 3 verwendete Beugungsstruktur weist mit Vorteil eine Profiltiefe T_{G} in der Nähe des ersten Minimums auf, da an dieser Stelle die Polarisation des gebeugten Lichts am stärksten ist. Das gebeugte Licht ist daher linear polarisiert, d.h. die diffraktive Reliefstruktur 16 wirkt als Polarisator bzw. für das polarisiert einfallende Licht 17 (Fig. 3) als Analysator. Ein nutzbarer Bereich der geometrischen Profiltiefe D umfasst Werte T_{G} zwischen 50 nm und 350 nm. Für die Prägeschicht 11 geeignete Materialien besitzen gemäss Tabelle 6 in der eingangs erwähnten US 4,856,857 eine Brechzahl n im Bereich von etwa 1,4 bis 1,6.

Ist die Beugungsstruktur in ihrer Ebene um 90° gedreht, wobei nun die Furchen 19 parallel und der Gittervektor k senkrecht zur Zeichnungsebene der Figur 3 ausgerichtet sind, wird das bezogen auf die Ebene des einfallenden Lichts 17 (Fig. 3) s - polarisierte Licht absorbiert und das p - polarisierte Licht gemäss der Effizienzkurve TE gebeugt. Anhand des Polarisationsvermögens dieser Beugungsstruktur ist die Richtung des Gittervektors k (Fig. 3) feststellbar.

Das in der Figur 5 dargestellte Etikett 1 ist aus dem Schichtverbund 15 (Fig. 2) ausgeschnitten. Die zwischen den Schichten 11 und 13 (Fig. 2) des Schichtverbunds 15 eingebetteten, mit der Reflexionsschicht 12 (Fig. 2) überzogenen, mikroskopisch feinen optisch aktiven Strukturen, das sind Beugungsstrukturen, Spiegel usw., definieren die schmalen, rechteckförmigen Felder 4 und die Zwischenflächen 5 des maschinell lesbaren diffraktiven Strichcodes 3 im Areal 2. In den Feldern 4 ist eine erste diffraktive Reliefstruktur 16 (Fig.3) in die Prägeschicht 11 abgeformt. Die erste diffraktive Reliefstruktur 16 ist eine additive Überlagerung aus der ersten Beugungsstruktur nullter Ordnung mit dem ersten Gittervektor k1 und einer mikroskopisch feinen lichtstreuenden Reliefstruktur. Die mikroskopisch feine lichtstreuende Reliefstruktur ist eine Struktur aus der Gruppe von isotrop oder anisotrop streuenden Mattstrukturen, von Kinoformen oder von Fourier Hologrammen. Die derart erzeugte diffraktive Reliefstruktur 16 weist den Vorteil auf, dass im Gegensatz zur ebenen Beugungsstruktur unabhängig vom Winkel des auf die diffraktive Reliefstruktur 16 einfallenden Lichts 17 (Fig. 3) das gebeugte Licht in den ganzen Halbraum über der diffraktiven Reliefstruktur 16 zurückgeworfen wird. Die lichtstreuende Reliefstruktur ist mit Vorteil so gewählt, dass das gebeugte Licht vorzugsweise in Richtung zum Lesegerät rückgestreut wird. Dies ist eine Voraussetzung dafür, dass handelsübliche Lesegeräte für drucktechnisch erstellte Strichcode zum Ablesen des praktisch fälschungssicheren Strichcodes 3 eingesetzt werden können. Ist die mikroskopisch feine lichtstreuende Reliefstruktur eine Kinoform, muss die Lichtquelle des Lesegeräts kohärentes Licht erzeugen, da sonst der angestrebte Streueffekt ausbleibt.

In einer anderen Ausführung des Strichcodes 3 sind die Zwischenflächen 5 mit wenigstens einer weiteren diffraktiven Beugungsstruktur mit dem weiteren Gittervektor k2 belegt, dessen Azimut sich vom Azimut des ersten Gittervektors k1 um wenigstens ± 20° modulo 180° unterscheidet. In einer anderen Ausführung weisen die Zwischenflächen 5 eine spiegelnde Oberflächenstruktur auf, beispielsweise eine ebene Spiegelfläche oder eine Beugungsstruktur nullter Ordnung.

In einer weiteren Ausführung sind alle Zwischenflächen 5 mit einer zweiten diffraktiven Reliefstruktur 20 (Fig. 3) belegt. Die zweite diffraktive Reliefstruktur 20 ist eine Überlagerung aus einer zweiten Beugungsstruktur nullter Ordnung mit dem zweiten Gittervektor k2 und einer der oben genannten, mikroskopisch feinen lichtstreuenden Reliefstrukturen. Die Gittervektoren k1 und k2 schliessen einen Azimutwinkel im Bereich von 45° bis 135° ein, wobei die beiden Gittervektoren k1 und k2 vorzugsweise senkrecht, wie in der Zeichnung der Figur 5 dargestellt, aufeinander ausgerichtet sind.

In einer bevorzugten Ausführung weisen die erste Beugungsstruktur nullter Ordnung und die zweite Beugungsstruktur nullter Ordnung bis auf die Richtung der Gittervektoren k1, k2 gleiche Parameter auf. Unterscheiden sich die erste Reliefstruktur 16 und die zweite Reliefstruktur 20 nur durch die Richtung der Gittervektoren k1 und k2 der beiden Beugungsstrukturen nullter Ordnung, ist der Strichcode 3 ohne Hilfsmittel nicht erkennbar, da für einen Beobachter sowohl die Felder 4 als auch die Zwischenflächen 5 gleich hell und in gleicher Farbe erscheinen. Hilfsmittel sind hier eine Beleuchtung des Strichcodes 3 mit polarisiertem Licht oder ein Betrachten des Strichcodes 3 durch ein optisches Polarisationsfilter hindurch. Bei der Betrachtung des Strichcodes 3 durch das optische Polarisationsfilter hindurch erkennt der Beobachter z.B. die Felder 4 als helle Balken, die durch als dunkle Balken erscheinende Zwischenflächen 5 getrennt sind. Nach einer Drehung des Polarisationsfilters in seiner Ebene um 90° sind die Felder 4 die dunklen Balken und die Zwischenflächen 5 die hellen Balken.

Diese Ausführung des Strichcodes 3 weist einen weiteren Vorteil auf: Der Strichcode 3 ist noch lesbar, falls im Areal 2 ein drucktechnisch erzeugter weiterer Strichcode als Indicia 18 (Fig. 2) über dem diffraktiven Strichcode 3 angeordnet ist. Die Indicia 18 sind durch farbfreie Zwischenräume getrennte Striche 21 des weiteren Strichcodes und sind auf oder unter der Deckschicht 10 des Schichtverbunds 15 (Fig. 2) mit einer Licht absorbierenden Farbe gedruckt. Der drucktechnisch erzeugte weitere Strichcode ist mit dem handelsüblichen Lesegerät auch zu erkennen. Die Striche 21 und die dazwischenliegenden, farbfreien Zwischenräume sind parallel zu den Feldern 4 und Zwischenflächen 5 des diffraktiven Strichcodes 3 ausgerichtet. In der Zeichnung der Figur 5 sind aus darstellerischen Gründen nur ein paar der Striche 21 gezeichnet. Die Erkennbarkeit der schmalen Balken des diffraktiven Strichcodes 3 ist eine Bedingung für ein erfolgreiches Lesen. Die Striche 21 des weiteren Strichcodes dürfen die schmalen Balken des diffraktiven Strichcodes 3 höchstens im Bereich von 50% bis 70% abdecken, d.h. durch die farbfreien Zwischenräume hindurch sind die Flächen von jedem Feld 4 und jeder Zwischenfläche 5 wenigstens zu 30 % sichtbar. Mit dem weiteren Strichcode ist jedes Etikett 1 kostengünstig individualisierbar, z.B. durch eine fortlaufende Numerierung.

In der Figur 6 sind das Areal 2 mit dem ersten diffraktiven Strichcode 3 und das zum Areal 2 parallele Strichcodefeld 9 mit einem aus Feldflächen 22 und Zwischenfeldern 23 gebildeten, zweiten diffraktiven Strichcode 24 gezeigt. Stossen in einer Ausführung des Etiketts 1 das Areal 2 und das Strichcodefeld 9 mit ihren Längsseiten aneinander, bilden das Areal 2 und das Strichcodefeld 9 einen Feldanteil 25 des Etiketts 1. Die beiden diffraktiven Strichcode 3, 24 sind nebeneinander und parallel im Feldanteil 25 angeordnet. Damit beim maschinellen Auslesen die beiden Strichcode 3, 24 getrennt erkannt werden, unterscheiden sich die Felder 4 des ersten Strichcodes 3 von den Feldflächen 22 des zweiten Strichcodes 24 wenigstens durch ihr Polarisationsvermögen. Die Felder 4 weisen die oben beschriebene erste diffraktive Reliefstruktur 16 (Fig. 3) auf. Die Feldflächen 22 des zweiten Strichcodes 24 sind mit der oben beschriebenen zweiten diffraktiven Reliefstruktur 20 (Fig. 3) belegt. Die ersten und zweiten Gittervektoren k1 (Fig. 5); k2 (Fig. 5) sind mit Vorteil senkrecht zueinander ausgerichtet. Die Zwischenflächen 5 und die Zwischenfelder 23 weisen wenigstens eine weitere diffraktive Reliefstruktur mit einem weiteren Gittervektor k, dessen Azimut sich von den Azimuten der ersten und zweiten Gittervektoren k1; k2 um wenigstens ± 20° unterscheidet, oder eine der oben genannten spiegelnden Oberflächenstrukturen auf. Im einfallenden Licht 17 (Fig. 3) mit der einen Polarisation erscheinen aus der Richtung der Lichtquelle gesehen die Felder 4 hell und die Zwischenflächen 5 sowie der zweite diffraktive Strichcode 24 dunkel. Im einfallenden Licht 17 mit der anderen Polarisation sind die Feldflächen 22 hell und die Zwischenfelder 23 sowie der erste diffraktive Strichcode 3 dunkel.

Die bisher besprochenen diffraktiven Strichcode 3, 24 weisen eine Höhe H im Bereich von 0.8 cm und 2 cm auf. Die Breite B der schmalen Balken beträgt mindestens 90 µm.

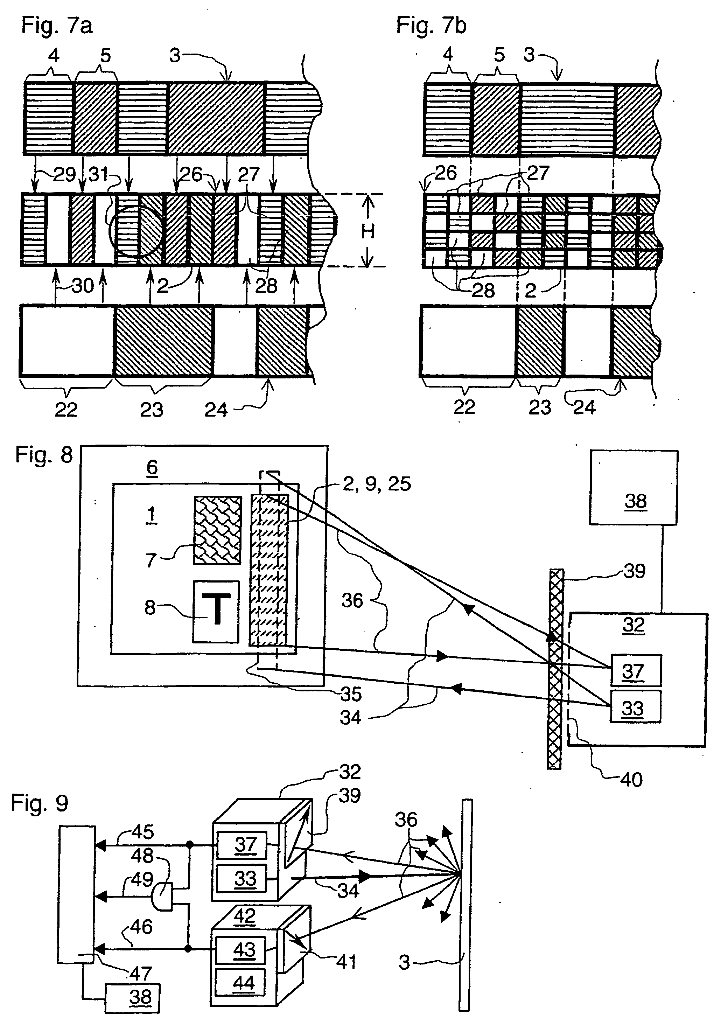

In einer anderen Ausführung sind die beiden Strichcode 3, 24 nicht parallel nebeneinander sondem gemäss den Figuren 7a und 7b im Areal 2 derart angeordnet, dass die beiden Strichcode 3 und 24 die optisch wirksamen Strukturen von ersten und zweiten Teilflächen 27, 28 eines verschachtelten Strichcodes 26 bestimmen, wobei jeweils zwei benachbarte, dem ersten Strichcode 3 zugeordnete erste Teilflächen 27 durch eine der dem zweiten Strichcode 24 zugeordneten zweiten Teilflächen 28 getrennt sind. Die Teilflächen 27, 28 des verschachtelten Strichcodes 26 weisen die halbe Fläche der aus den Feldern 4 und den Zwischenflächen 5 bzw. den Feldflächen 22 und den Zwischenfeldern 23 gebildeten Balken der Strichcode 3 bzw. 24 auf. Die Verschachtelung kann sehr fein unterteilt sein, wobei die Balken unabhängig von ihrer Breite B (Fig. 6) in einer ganzzahligen Anzahl der Teilflächen 27 bzw. 28 zerlegt werden, da die Teilflächen nur eine Mindestbreite von 15 µm aufweisen müssen.

In der Zeichnung der Figur 7a sind beispielsweise die schmalen Balken der Strichcode 3 bzw. 24 einer Teilfläche 27 bzw. 28 und die breiten Balken zwei Teilflächen 27 bzw. 28 zugeordnet. Die gleichgrossen ersten Teilflächen 27 und zweiten Teilflächen 28 sind mit ihren Längsseiten abwechslungsweise im Areal 2 so angeordnet, dass jeweils auf eine der ersten Teilflächen 27 eine der zweiten Teilflächen 28 folgt. In der vom Strichcode 3 und vom Strichcode 24 vorbestimmten Reihenfolge sind die optisch wirksamen Strukturen in den ersten Teilflächen 27 und in den zweiten Teilflächen 28 angeordnet. In der Zeichnung der Figur 7 verdeutlichen die Pfeile 29, 30, wie sich der verschachtelte Strichcode 26 aus den beiden Strichcode 3, 24 zusammensetzt. Zur Verdeutlichung sind die Teilflächen 27, 28 entsprechend der Zugehörigkeit zu den Balken 4, 5, 22, 23 schraffiert. Die ersten Teilflächen 27 der Felder 4 sind, bezogen auf die Längsausdehnung des Areal 2, längsgestreift. Die ersten Teilflächen 27 der Zwischenflächen 5 weisen eine nach rechts geneigte Schraffur auf. Die den Feldflächen 22 zugeordneten zweiten Teilflächen 28 sind ohne Schraffur, während eine nach links geneigte Schraffur die zweiten Teilflächen 28 der Zwischenfelder 23 markiert.

Die schmalen Balken mit einer Breite von etwa 90 µm bis 120 µm sind durch die wenigstens 25 µm breiten Teilflächen 27, 28 maximal achtfach unterteilt. Das handelübliche Lesegerät beleuchtet den Strichcode mit einem das Areal 2 längsweise optisch abtastenden Lichtstrahl in einem beleuchteten Fleck 31 von etwa 0,1 mm Durchmesser. Der beleuchtete Fleck 31 erstreckt sich über die Teilflächen 28 bzw. 27, die einem der schmalen Balken zugehören.

Die beschriebene Verschachtelung der beiden Strichcode 3, 24 ist nur eine von einer Vielzahl von Möglichkeiten. Eine andere Ausführung des verschachtelten Strichcodes 26 gemäss Figur 7b weist eine schachbrettartige Anordnung von pixelartigen gleichgrossen Teilflächen 27, 28 von etwa 15 µm bis 25 µm Seitenlänge auf, wobei die ersten Teilflächen 27 des ersten diffraktiven Strichcodes 3 den Platz der schwarzen Flächen und die zweiten Teilflächen 28 des zweiten diffraktiven Strichcodes 24 den Platz der weissen Flächen im Schachbrett einnehmen. Den Teilflächen 27, 28 sind die optisch aktiven Strukturen in der Abfolge der Balken der beiden Strichcode 3, 24 zugeordnet.

Die Höhe H (Fig. 7a) der Balken der Strichcode 3, 24, 26 weist einen Wert im Bereich von etwa 0.8 cm bis 2 cm auf. Diese Höhe H erlaubt in Grenzen ein Ablesen der hier besprochenen Strichcode 3, 24, 26 in einer zur Längsberandung des Areals 2, 9 (Fig. 6), 25 (Fig. 6) schiefen Richtung. Das Areal 2, 9, 25 steht im folgenden auch stellvertretend für das Strichcodefeld 9 und für den Feldanteil 25.

In der Figur 8 ist schematisch eine Leseanordnung mit einem Lesegerät 32 für die Strichcode 3, 24, 26 gezeigt. Eine Lichtquelle 33 erzeugt einen Ablesestrahl 34 mit polarisiertem oder unpolarisiertem Licht, der vom Lesegerät 32 mit einer hier nicht gezeigten Ablenkeinrichtung wiederholt über einen Lesebereich 35 hin- und hergeführt wird. Sobald das Areal 2, 9, 25 des Etiketts 1 am Gegenstand 6 in den Lesebereich 35 kommt, wird im beleuchteten Fleck 31 (Fig. 7) rückgestreutes Licht 36 in der Intensität entsprechend des Strichcode 3, 24, 26 moduliert. Das rückgestreute Licht 36 fällt in der Leseanordnung 32 auf wenigstens einen Photodetektor 37. Das rückgestreute Licht 36 wird vom Photodetektor 37 in der Intensität des rückgestreuten Lichts 36 proportionale, elektrische Signale umgewandelt, die von der Leseeinrichtung 32 analysiert werden. Falls die Leseeinrichtung 32 die Lichtmodulation als die eines ihr bekannten Strichcodes erkennt, wird eine der Information des Strichcodes 3, 24, 26 entsprechende Kodezahl an ein die Kodezahl weiterverarbeitendes Gerät 38 abgegeben.

Weist der diffraktive Strichcode nur die eine, oben beschriebene, als Polarisator wirkende diffraktive Reliefstruktur 16 (Fig. 3) auf, ist das rückgestreute Licht 36 des diffraktiven Strichcodes mit dem oben skizzierten Lesegerät 32 lesbar, falls ein erstes optisches Polarisationsfilter 39 wenigstens vor dem Photodetektor 37 angeordnet und derart ausgerichtet ist, dass das polarisierte rückgestreute Licht 36 das erste Polarisationsfilter 39 ungeschwächt passiert. Bei der Verwendung von polarisiertem Licht für den Ablesestrahl 34 muss das Licht derart polarisiert sein, dass die Beugung an der ersten Reliefstruktur 16 mit maximaler Effizienz erfolgt. Dies ist beispielsweise der Fall, wenn der Ablesestrahl 34 und das rückgestreute Licht 35 das gleiche vor einem Fenster 40 des Lesegeräts 32 angeordnete Polarisationsfilter 39 durchdringen und die erste diffraktive Reliefstruktur 16 als Analysator im Azimut auf die Polarisationsebene des Polarisationsfilters 39 ausgerichtet ist.

Sind auf dem Etikett 1 Flächen mit zwei als Polarisatoren wirkenden diffraktiven Reliefstrukturen 16 und 20 (Fig. 3) angeordnet und unterscheiden sich die diffraktiven Reliefstrukturen 16 und 20 wenigstens im Polarisationsvermögen, so ist eine Leseanordnung nach der Figur 9 in der Lage, die in den ersten und zweiten diffraktiven Reliefstrukturen 16 (Fig. 3) und 20 (Fig. 3) enthaltenen Informationen getrennt auszulesen. Falls ein unpolarisierter Ablesestrahl 34 eingesetzt ist, genügt ein zweiter Photodetektor 43, der gleichzeitig das an der zweiten als Polarisator wirkende Reliefstruktur 20 rückgestreute Licht 36 empfängt, wobei ein zweites optisches Polarisationsfilter 41 so ausgerichtet vor dem zweiten Photodetektor 43 angeordnet ist, dass nur das an der zweiten Reliefstruktur 20 rückgestreute Licht 36 zum zweiten Photodetektor 43 vordringt.

In einer einfachen Ausführung umfasst die Leseanordnung zwei handelsübliche Lesegeräte 32, 42, die so ausgerichtet sind, dass das rückgestreute Licht 36 sowohl in den ersten Photodetektor 37 im ersten Lesegerät 32 als auch in einen zweiten Photodetektor 43 des zweiten Lesegeräts 42 fällt. Das von der Lichtquelle 33 des ersten Lesegeräts 32 ausgesandte, unpolarisierte Licht des Ablesestrahls 34 wird an den beiden diffraktiven Reliefstrukturen 16, 20 des diffraktiven Strichcodes 3 in den Halbraum über dem Strichcode 3 gestreut. Das vor dem ersten Photodetektor 37 angeordnete erste Polarisationsfilter 39 ist nur für das an den ersten diffraktiven Reliefstrukturen 16 rückgestreute Licht 36 durchlässig, während der zweite Photodetektor 43 hinter dem Polarisationsfilter 41 ausschliesslich das von den zweiten diffraktiven Reliefstrukturen 20 rückgestreute Licht 36 empfängt. Die Lichtquelle 44 im zweiten Lesegerät 42 wird nicht benötigt.

Ein Ausgang 45 des ersten Photodetektors 36 und ein Ausgang 46 des zweiten Photodetektors 43 sind mit einem Analysator 47 der Leseanordnung verbunden. Der Analysator 47 erzeugt die Kodezahl für das mit dem Analysator 47 verbundene weiterverarbeitende Gerät 38. Beim Ablesen werden gleichzeitig die von den Photodetektoren 36, 43 erzeugten Signale verarbeitet und die entsprechenden Kodezahlen dem weiterverarbeitenden Gerät 38 übermittelt.

Die Leseanordnung mit zwei handelsüblichen Lesegeräten 32, 42 ist für das Auslesen des oben beschriebenen diffraktiven Strichcode 3 geeignet, dessen Felder 4 (Fig. 5) mit der ersten diffraktiven Reliefstruktur 16 und deren Zwischenflächen 5 (Fig. 5) mit der zweiten diffraktiven Reliefstruktur 20 belegt sind. An den beiden Ausgängen 45 und 46 sind daher zu jedem Zeitpunkt die von den Photodetektoren 37, 43 beim Ablesen dieses Strichcodes 3 erzeugten Signale zueinander komplementär. Dies ermöglicht mit Vorteil eine sicherheitstechnische Überprüfung des abgelesenen Strichcodes 3.

Die Striche 21 (Fig. 5) des weiteren Strichcodes, der wie oben beschrieben über dem aus der ersten diffraktiven Reliefstruktur 16 und der zweiten diffraktiven Reliefstruktur 20 erzeugten diffraktiven Strichcode 3 drucktechnisch z.B. auf die Deckschicht 10 aufgetragen ist, absorbieren das im beleuchteten Fleck 31 (Fig. 7) auftreffende Licht. Die schmalen Striche 21 sind etwa so breit wie der Durchmesser des vom Ablesestrahl 34 beleuchteten Flecks 31 und die breiten Striche 21 wenigstens doppelt so breit wie die schmalen Striche 21. Die schmalen Balken des diffraktiven Strichcodes 3 haben die Breite B (Fig. 6) von wenigstens drei schmalen Strichen, damit in den farbfreien Zwischenräumen des weiteren Strichcodes wenigstens 30% der Fläche der Felder 4 bzw. der Zwischenflächen 5 sichtbar sind. Überdeckt der Fleck 31 den Strich 21, wird kein rückgestreutes Licht 36 erzeugt und auf den beiden Ausgängen 45, 46 ist kein Signal der Photodetektoren 37,43 vorhanden. Eingänge einer logischen Einheit 48 sind mit den beiden Ausgängen 45, 46 verbunden. Für die Dauer eines Zusammentreffen des Zustandes "kein Signal" auf den beiden Ausgängen 45, 46 ändert die logische Einheit 48 ihr Ausgangssignal und erzeugt auf einer Leitung 49 zwischen der logischen Einheit 48 und dem Analysator 47 das Lesesignal für den aus den Strichen 21 gebildeten weiteren Strichcode. Der Analysator 47 erzeugt daraus die Kodezahl entsprechend der im abgelesenen weiteren Strichcode enthaltenen individuellen Information der Etikette 1 (Fig. 1). Die Information des gleichzeitig mit dem weiteren Strichcode ausgelesenen diffraktiven Strichcodes 3 gibt z.B. Auskunft über den Herausgeber der Etikette 1. Der Vorteil dieser Leseanordnung ist, dass sie den drucktechnisch erzeugten weiteren Strichcode und den diffraktiven Strichcode 3 gleichzeitig ausliest und aus handelsüblichen Lesegeräten 32, 42 aufgebaut ist.

Damit beim maschinellen Auslesen der Strichcode 3, 24, 26 keine Störungen durch an den aus mosaikartig angeordneten diffraktiven Gitterstrukturen gebildeten Emblemen 7 (Fig. 8) und Zahlen und Buchstaben 8 (Fig. 8) gebeugtes Licht eintreten, unterscheiden sich die Azimute der Gittervektoren k dieser diffraktiven Gitterstrukturen um wenigstens ± 20° von den Azimuten der Gittervektoren k1 bzw. k1 und k2 der in den diffraktiven Strichcode 3, 24, 26 verwendeten Beugungsstrukturen. Weisen beispielsweise die Gittervektoren k1 und k2 die Azimute 0° und 90° auf, so sind die Azimute der Gittervektoren k aus den Bereichen 20° bis 70° und 110° bis 160° jeweils modulo 180° zu wählen.

Anstelle von sichtbarem Licht sind auch die benachbarten Bereiche des Spektrums des visuell sichtbaren Lichts einsetzbar, insbesondere der nahe infrarote Bereich.

Wie aus der Figur 4 ersichtlich, wird unpolarisiert einfallendes Licht 17 (Fig. 9) an der ersten bzw. zweiten diffraktiven Reliefstruktur 16 (Fig. 9) nicht vollständig linear polarisiert. Das rückgestrahlte Licht 36 (Fig. 9) weist für jede diffraktive Reliefstruktur 16 neben der intensiven, gemäss der Effizienzkurve TE gebeugten Komponente auch eine schwächere, gemäss der Effizienzkurve TM gebeugten Komponente auf. Jedoch überwiegt die Intensität der einen der beiden polarisierten Komponenten des rückgestrahlten Lichts 36 derart, dass z.B. das eine Lesegerät 32 (Fig. 9) durch das erste Polarisationsfilter 39 (Fig. 9) hindurch die intensivere Komponente empfängt, während die schwächere Komponente das andere Lesegerät 42 (Fig. 9) durch das zweite Polarisationsfilter 41 (Fig. 9) hindurch erreicht. Die Lesegeräte 32, 42 reagieren nur auf die Komponente des rückgestrahlten Lichts 36 mit der höheren Intensität.

## Patentansprüche

1. Etikett (1) aus einem Schichtverbund (15) mit zwischen Schichten (11; 13) des Schichtverbunds (15) eingebetteten, mit einer Reflexionsschicht (12) überzogenen, mikroskopisch feinen, optisch aktiven Strukturen, die in einem bandförmigen Areal (2; 9; 25) wenigstens einen maschinell lesbaren diffraktiven Strichkode (3; 24) bilden und die in Form von schmalen, rechteckförmigen Feldern (4) mit einer diffraktiven Reliefstruktur (16; 20) und von die Felder (4) trennenden Zwischenflächen (5) angeordnet sind, wobei
die diffraktive Reliefstruktur (16; 20) eine additive Überlagerung eines ebenen Beugungsgitters nullter Ordnung mit einer mikroskopisch feinen lichtstreuenden Reliefstruktur ist, wobei das Beugungsgitter nullter Ordnung mehr als 2300 Linien pro Millimeter, eine geometrische Profiltiefe im Bereich von 50 nm bis 350 nm und einen Gittervektor (k; k1; k2) aufweist und die lichtstreuende Reliefstruktur eine der Strukturen aus der Gruppe Mattstrukturen, Kinoformen und Fourier-Hologrammen ist,
das Polarisationsvermögen der diffraktiven Reliefstruktur (16; 20) mittels der Richtung des Gittervektors (k; k1; k2) des Beugungsgitters nullter Ordnung festgelegt ist, so dass an der diffraktiven Reliefstruktur (16; 20) gebeugtes und in den ganzen Halbraum über der diffraktiven Reliefstruktur (16; 20) rückgestreutes Licht (35) linear polarisiert ist, und sich die mikroskopisch feinen, optisch aktiven Strukturen der übrigen Flächen wenigstens im Polarisationsvermögen von der diffraktiven Reliefstruktur (16; 20) unterscheiden.

2. Etikett (1) nach Anspruch 1,
**dadurch gekennzeichnet,**
**dass** die Zwischenflächen (5) eine der spiegelnden Oberflächenstrukturen der Gruppe ebene Spiegelflächeri und Beugungsstrukturen nullter Ordnung aufweisen.

3. Etikett (1) nach Anspruch 1,
**dadurch gekennzeichnet,**
**dass** die Zwischenflächen (5) als absorbierende Balken ausgeführt sind.

4. Etikett (1) nach Anspruch 1,
**dadurch gekennzeichnet,**
**dass** die Zwischenflächen (5) wenigstens eine weitere, aus einer additiven Überlagerung einer weiteren Beugungsstruktur nullter Ordnung mit einer der lichtstreuenden Reliefstrukturen bestehende diffraktive Reliefstruktur (20) aufweisen, wobei sich der Azimut des Gittervektors (k) der weiteren Beugungsstruktur nullter Ordnung vom Azimut des ersten Gittervektors (k1) unterscheidet.

5. Etikett (1) nach einem der Ansprüche 1 bis 3,
**dadurch gekennzeichnet,**
**dass** ein aus Feldflächen (22) und Zwischenfeldern (23) gebildeter, zweiter diffraktiver Strichkode (24) parallel zum ersten diffraktiven Strichkode (3) im Areal (2; 9; 25) angeordnet ist, dass die Feldflächen (22) des zweiten Strichkodes (24) eine zweite diffraktive Reliefstruktur (20) aufweisen, die eine Überlagerung einer zweiten Beugungsstruktur nullter Ordnung mit einer der mikroskopisch feinen lichtstreuenden Reliefstrukturen ist, wobei der erste Gittervektor (k1) der ersten Beugungsstruktur nullter Ordnung und der zweite Gittervektor (k2) der zweiten Beugungsstruktur nullter Ordnung einen Azimutwinkel im Bereich von 45° bis 135° einschliessen.

6. Etikett (1) nach Anspruch 5,
**dadurch gekennzeichnet,**
**dass** die Zwischenflächen (5) und die Zwischenfelder (23) wenigstens eine weitere, aus einer additiven Überlagerung einer weiteren Beugungsstruktur nullter Ordnung mit einer der lichtstreuenden Reliefstrukturen bestehende diffraktive Reliefstruktur aufweisen, wobei sich der Azimut des Gittervektors (k) der weiteren Beugungsstruktur nullter Ordnung vom Azimut des ersten und des zweiten Gittervektors (k1; k2) um wenigstens ± 20° unterscheidet.

7. Etikett (1) nach Anspruch 5,
**dadurch gekennzeichnet,**
**dass** die Zwischenfelder (23) eine der spiegelnden Oberflächenstrukturen der Gruppe ebene Spiegelflächen und Beugungsstrukturen nullter Ordnung aufweisen.

8. Etikett (1) nach Anspruch 5 bis 7,
**dadurch gekennzeichnet,**
**dass** der erste und der zweite Strichkode (3; 24) ineinander verschachtelt sind, wobei sowohl die Felder (4) und die Zwischenflächen (5) des ersten Strichkodes (3) eine vorbestimmte Einteilung in erste Teilflächen (27) als auch die Feldflächen (22) und die Zwischenfelder (23) des zweiten Strichkodes (24) die gleiche Einteilung in zweite Teilflächen (28) aufweisen, dass im Areal in der von den beiden Strichkodes (3; 24) vorbestimmten Reihenfolge die ersten Teilflächen (27) und die zweiten Teilflächen (28) derart angeordnet sind, dass jeweils zwei benachbarte erste Teilflächen (27) durch eine der zweiten Teilflächen (28) getrennt sind.

9. Etikett (1) nach einem der Ansprüche 5 bis 7,
**dadurch gekennzeichnet,**
**dass** die Beugungsstrukturen nullter Ordnung der ersten und der zweiten diffraktiven Reliefstruktur (16; 20) bis auf die Richtung der Gittervektoren (k1; k2) gleiche Parameter aufweisen.

10. Etikett (1) nach einem der Ansprüche 5 bis 7,
**dadurch gekennzeichnet,**
**dass** sich die erste und die zweite diffraktive Reliefstruktur (16; 20) nur durch die Richtung der Gittervektoren (k1; k2) der beiden Beugungsstrukturen nullter Ordnung unterscheiden.

11. Etikett (1) nach einem der Ansprüche 1 bis 10,
**dadurch gekennzeichnet,**
**dass** wenigstens eine der Schichten (10; 11) des Schichtverbunds (15) mit Licht absorbierender Farbe aufgedruckte Indicia (18) aufweist.

12. Etikett (1) nach Anspruch 11,
**dadurch gekennzeichnet,**
**dass** ein Teil der Indicia (18) Streifen (21) eines optisch maschinell lesbaren, drucktechnisch erzeugten Strichkodes bilden, wobei die Streifen (21) durch dazwischenliegende, farbfreie Zwischenräume getrennt sind und parallel zu den Feldern (4) und den Zwischenflächen (5) des diffraktiven Strichkodes (3; 24; 26) ausgerichtet sind.

13. Etikett (1) nach Anspruch 11,
**dadurch gekennzeichnet,**
**dass** der drucktechnisch erzeugte Strichkode über dem diffraktiven Strichkode (3) angeordnet ist und dass durch die farbfreien Zwischenräume hindurch wenigstens 30 % von jedem Feld (4) und jeder Zwischenfläche (5) des diffraktiven Strichkodes (3) sichtbar sind.

14. Leseanordnung zum optischen Auslesen von Informationen aus einem Areal (2; 9; 25) auf einem Etikett (1) nach einem der Ansprüche 1 bis 13 bestehend aus
a) einem ersten Strichkode - Lesegerät (32) mit einem transparenten Fenster (40), mit einem durch das Fenster (40) austretenden Ablesestrahls (34) zum optischen Abtasten eines Lesebereichs (35), mit einem ersten Photodetektor (37), der zum Empfangen von im Lesebereich (35) rückgestreutem Licht (35) des Ablesestrahls (34) eingerichtet ist, und mit einem vor dem ersten Photodetektor (37) angeordneten, optischen ersten Polarisationsfilter (39) zum Ausfiltern des nicht vorbestimmt linear polarisierten rückgestreuten Lichts (35),
b) einem identisch aufgebauten zweiten Strichkode - Lesegerät (42) mit dem transparenten Fenster (40), mit einer inaktiven Lichtquelle (44) und mit einem zweiten Photodetektor (43), wobei das zweite Strichkode - Lesegerät (42) zum Empfangen des im Lesebereich (35) rückgestreuten Lichts (35) des Ablesestrahls (34) des-ersten Strichkode - Lesegeräts (32) eingerichtet ist, und mit einem vor dem zweiten Photodetektor (43) angeordneten, gegenüber dem ersten optischen Polarisationsfilter (39) um einen vorbestimmten Winkel verdreht ausgerichteten zweiten optischen Polarisationsfilter (41) zum Ausfiltern des nicht vorbestimmt linear polarisierten rückgestreuten Lichts (35) und
c) einem ersten Ausgang (45) des ersten Photodetektors (37) und einem zweiten Ausgang (46) des zweiten Photodetektors (43), auf denen der Intensität des auf die Photodetektoren (37; 43) rückgestreuten Lichts (35) proportionalen elektrischen Signale erscheinen,
d) einem Signalanalysator (47), der mit dem ersten Ausgang (45) und mit dem zweiten Ausgang (46) verbunden ist, zum Erzeugen einer Kodezahl für die vom ersten Ausgang (45) und für die vom zweiten Ausgang (46) an den Signalanalysator (47) übermittelten elektrischen Signale der Photodetektoren (37; 43).

15. Leseanordnung nach Anspruch 14,
' **dadurch gekennzeichnet,**
**dass** weiter ein logisches Element (48) vorhanden ist, dass je ein Eingang des logischen Elements (48) mit den Ausgängen (45; 46) und ein Ausgang des logischen Elements (48) über eine Leitung (49) mit dem Signalanalysator (47) verbunden sind, dass das logische Element (48) beim gleichzeitigen Fehlen der elektrischen Signale der beiden Photodetektoren (37; 43) an den Ausgängen (45; 46) ein Ausgangssignal über die Leitung (49) an den Signalanalysator (47) zum Erzeugen einer weiteren Kodezahl abgibt.

## Claims

1. Label (1) comprising a laminar composite (15) having microscopically fine, optically active structures which are embedded between layers (11; 13) in the laminar composite (15), are coated with a reflective layer (12) and form at least one machine-readable diffractive bar code (3; 24) in a band-like area (2; 9; 25) and which are arranged in the form of narrow, rectangular fields (4) with a diffractive relief structure (16; 20) and in the form of intermediate expanses (5) separating the fields (4), where
the diffractive relief structure (16; 20) comprises a planar zeroth-order diffraction grating additively overlaid with a microscopically fine light-dispersing relief structure, where the zeroth-order diffractive grating has more than 2300 lines per millimetre, a geometrical profile depth in the range from 50 nm to 350 nm and a grating vector (k; k1; k2), and the light-dispersing relief structure is one of the structures from the group comprising ground-glass structures, kinoforms and Fourier holograms,
the polarizing capacity of the diffractive relief structure (16; 20) is stipulated by means of the direction of the grating vector (k; k1; k2) of the zeroth-order diffraction grating, so that light (35) which is diffracted at the diffractive relief structure (16; 20) and is scattered back into the entire half-space via the diffractive relief structure (16; 20) has linear polarization, and the microscopically fine, optically active structures of the remaining expanses differ from the diffractive relief structure (16; 20) at least in terms of the polarizing capacity.

2. Label (1) according to Claim 1,
**characterized**
**in that** the intermediate expanses (5) have one of the reflective surface structures from the group comprising planar reflective faces and zeroth-order diffraction structures.

3. Label (1) according to Claim 1,
**characterized**
**in that** the intermediate expanses (5) are in the form of absorbent bars.

4. Label (1) according to Claim 1,
**characterized**
**in that** the intermediate expanses (5) have at least one further diffractive relief structure (20) comprising a further zeroth-order diffraction structure additively overlaid with one of the light-dispersing relief structures, and the azimuth of the grating vector (k) of the further zeroth-order diffraction structure differs from the azimuth of the first grating vector (k1).

5. Label (1) according to one of Claims 1 to 3,
**characterized**
**in that** a second diffractive bar code (24), formed from field expanses (22) and intermediate fields (23), is arranged parallel to the first diffractive bar code (3) in the area (2; 9; 25), in that the field expanses (22) of the second bar code (24) have a second diffractive relief structure (20), which comprises a second zeroth-order diffraction structure overlaid with one of the microscopically fine light-dispersing relief structures, and the first grating vector (k1) of the first zeroth-order diffraction structure and the second grating vector (k2) of the second zeroth-order diffraction structure form an azimuth angle in the range from 45° to 135°.

6. Label (1) according to Claim 5,
**characterized**
**in that** the intermediate expanses (5) and the intermediate fields (23) have at least one further diffractive relief structure comprising a further zeroth-order diffraction structure additively overlaid with one of the light-dispersing relief structures, and the azimuth of the grating vector (k) of the further zeroth-order diffraction structure differs from the azimuth of the first and second grating vectors (k1; k2) by at least ± 20°.

7. Label (1) according to Claim 5,
**characterized**
**in that** the intermediate fields (23) have one of the reflective surface structures from the group comprising planar reflective faces and zeroth-order diffraction structures.

8. Label (1) according to Claims 5 to 7,
**characterized**
**in that** the first and second bar codes (3; 24) are interleaved in one another, with the fields (4) and the intermediate expanses (5) of the first bar code (3) having a predetermined classification into first subexpanses (27) and then the field expanses (22) and the intermediate fields (23) of the second bar code (24) having the same classification into second subexpanses (28), in that the area contains the first subexpanses (27) and the second subexpanses (28), in the order predetermined by the two bar codes (3; 24), arranged such that two adjacent first subexpanses (27) are respectively separated by one of the second subexpanses (28).

9. Label (1) according to one of Claims 5 to 7,
**characterized**
**in that** the zeroth-order diffraction structures of the first and second diffractive relief structures (16; 20) have identical parameters apart from the direction of the grating vectors (k1; k2).

10. Label (1) according to one of Claims 5 to 7,
**characterized**
**in that** the first and second diffractive relief structures (16; 20) differ only in the direction of the grating vectors (k1; k2) of the two zeroth-order diffraction structures.

11. Label (1) according to one of Claims 1 to 10,
**characterized**
**in that** at least one of the layers (10; 11) in the laminar composite (15) has indicia (18) printed with light-absorbent dye.

12. Label (1) according to Claim 11,
**characterized**
**in that** some of the indicia (18) form strips (21) in an optically machine-readable bar code produced by printing, the strips (21) being separated by interposed, dye-free interspaces and being oriented parallel to the fields (4) and the intermediate expanses (5) of the diffractive bar code (3; 24; 26).

13. Label (1) according to Claim 11,
**characterized**
**in that** the bar code produced by printing is arranged above the diffractive bar code (3), and in that at least 30% of every field (4) and of every intermediate expanse (5) of the diffractive bar code (3) is visible through the dye-free interspaces.

14. Reading arrangement for optically reading information from an area (2; 9; 25) on a label (1) according to one of Claims 1 to 13, comprising
a) a first bar code reader (32) having a transparent window (40), having a reading beam (34) emitted through the window (40) for optically scanning a reading region (35), having a first photodetector (37), which is set up to receive light (35) scattered back in the reading region (35) from the reading beam (34), and having an optical first polarization filter (39), arranged upstream of the first photodetector (37), for filtering out the back-scattered light (35) whose linear polarization has not been predetermined,
b) an identically designed second bar code reader (42) having the transparent window (40), having an inactive light source (44) and having a second photodetector (43), where the second bar code reader (42) is set up to receive the light (35) scattered back in the reading region (35) from the reading beam (34) from the first bar code reader (32), and having a second optical polarization filter (41), which is arranged upstream of the second photodetector (43) and which is oriented so as to be twisted by a predetermined angle with respect to the first optical polarization filter (39), for filtering out the back-scattered light (35) whose linear polarization has not been predetermined, and
c) a first output (45) on the first photodetector (37) and a second output (46) on the second photodetector (43), which outputs produce electrical signals which are proportional to the intensity of the light (35) which is scattered back onto the photodetectors (37; 43),
d) a signal analyser (47), which is connected to the first output (45) and to the second output (46), for producing a code number for the electrical signals from the photodetectors (37; 43) which are transmitted to the signal analyser (47) from the first output (45) and for those which are transmitted to the signal analyser (47) from the second output (46).

15. Reading arrangement according to Claim 14,
**characterized**
**in that** there is also a logic element (48), in that a respective input on the logic element (48) is connected to the outputs (45; 46), and an output on the logic element (48) is connected to the signal analyser (47) via a line (49), in that the logic element (48) sends an output signal to the signal analyser (47) via the line (49) to produce a further code number if the electrical signals from the two photodetectors (37; 43) are simultaneously absent at the outputs (45; 46).

## Revendications

1. Etiquette (1) constituée d'un composé à couches (15) comprenant des structures à effet optique, microscopiquement fines, revêtues d'une couche de réflexion (12), encastrées entre les couches (11 ; 13) du composé à couches (15), lesquelles structures forment dans une aire en forme de bande (2 ; 9 ; 25) au moins un code-barres (3 ; 24) diffractif, susceptible d'être lu par une machine et qui sont disposées sous forme de champs (4) étroits, rectangulaires, comprenant une structure diffractive en relief (16 ; 20) et des surfaces de séparation (5) séparant les champs (4),
la structure diffractive en relief (16 ; 20) étant une superposition additive d'un réseau de diffraction uni d'ordre zéro à une structure en relief dispersant la lumière microscopiquement fine, le réseau de diffraction d'ordre zéro comprenant plus de 2300 lignes par millimètres, une profondeur géométrique de profil dans la plage de 50 nm à 350 nm et un vecteur de réseau (k ; k1 ; k2) et la structure en relief dispersant la lumière étant une des structures appartenant au groupe des structures mates, des filtres kinoform et des hologrammes de Fourier,
la force de polarisation de la structure diffractive en relief (16 ; 20) étant déterminée au moyen de la direction du vecteur de réseau (k ; k1 ; k2) du réseau de diffraction d'ordre zéro, de sorte qu'une lumière (35) diffractée sur la structure diffractive en relief (16 ; 20) et rétrodispersée dans l'ensemble de l'espace semi-infini par l'intermédiaire de la structure diffractive en relief (16 ; 20) est polarisée de façon linéaire, et la force de polarisation des structures des surfaces restantes, à effet optique, microscopiquement fines, différant de celle de la structure diffractive en relief (16 ; 20).

2. Etiquette (1) selon la revendication 1,
**caractérisée en ce que**
les surfaces de séparation (5) comprennent une des structures superficielles réfléchissantes du groupe des surfaces réfléchies unies et des structures de diffraction d'ordre zéro.

3. Etiquette (1) selon la revendication 1,
**caractérisée en ce que**
les surfaces de séparation (5) sont réalisées comme des barres absorbantes.

4. Etiquette (1) selon la revendication 1,
**caractérisée en ce que**
les surfaces de séparation (5) comprennent au moins une autre structure diffractive en relief (20), constituée d'une superposition additive d'une autre structure de diffraction d'ordre zéro à une des structures en relief dispersant la lumière, l'azimut du vecteur de réseau (k) de l'autre structure de diffraction d'ordre zéro différant de l'azimut du premier vecteur de réseau (k1).

5. Etiquette (1) selon l'une des revendications 1 à 3,
**caractérisée en ce qu'**un second code-barres diffractif (24), formé à partir des surfaces de champ (22) et des champs de séparation (23), est disposé parallèlement au premier code-barres diffractif (3) dans l'aire (2 ; 9 ; 25), **en ce que** les surfaces de champ (22) du second code-barres (24) comprennent une seconde structure diffractive en relief (20), qui est une superposition d'une seconde structure de diffraction d'ordre zéro à une des structures en relief dispersant la lumière microscopiquement fines, le premier vecteur de réseau (k1) de la première structure de diffraction d'ordre zéro et le second vecteur de réseau (k2) de la seconde structure de diffraction d'ordre zéro entourant un angle azimutal dans la plage de 45° à 135°.

6. Etiquette (1) selon la revendication 5,
**caractérisée en ce que**
les surfaces de séparation (5) et les champs de séparation (23) comprennent au moins une autre structure de diffraction en relief, constituée d'une superposition additive d'une autre structure de diffraction d'ordre zéro à une des structures en relief dispersant la lumière, l'azimut du vecteur de réseau (k) de l'autre structure de diffraction d'ordre zéro différant de l'azimut du premier et du second vecteurs de réseau (k1 ; k2) d'au moins ±20°.

7. Etiquette (1) selon la revendication 5,
**caractérisée en ce que**
les champs de séparation (23) comprennent une des structures superficielles réfléchissantes du groupe des surfaces réfléchies unies et des structures de diffraction d'ordre zéro.

8. Etiquette (1) selon les revendications 5 à 7,
**caractérisée en ce que**
le premier et le second codes-barres (3 ; 24) sont imbriqués l'un dans l'autre, les champs (4) et les surfaces de séparation (5) du premier code-barres (3) comprenant une répartition prédéfinie dans les premières surfaces partielles (27) et les surfaces de champ (22) et les champs de séparation (23) du second code-barres (24) comprenant la même répartition en deux surfaces partielles (28), **en ce que** dans l'aire, les premières surfaces partielles (27) et les secondes surfaces partielles (28) sont disposées dans l'ordre prédéfini par les deux codes-barres (3 ; 24) de telle sorte que respectivement deux premières surfaces partielles voisines (27) sont séparées par une des secondes surfaces partielles (28).

9. Etiquette (1) selon l'une des revendications 5 à 7,
**caractérisée en ce que**
les structures de diffraction d'ordre zéro de la première et de la seconde structures diffractives en relief (16 ; 20) jusqu'à la direction des vecteurs de réseau (k1 ; k2) comprennent des paramètres identiques.

10. Etiquette (1) selon l'une des revendications 5 à 7,
**caractérisée en ce que**
les première et seconde structures diffractives en relief (16 ; 20) ne diffèrent que par la direction des vecteurs de réseau (k1 ; k2) des deux structures de diffraction d'ordre zéro.

11. Etiquette (1) selon l'une des revendications 1 à 10,
**caractérisée**
**en ce qu'**au moins une des couches (10 ; 11) du composé à couches (15) comprend des indications (18) imprimées avec une couleur absorbant la lumière.

12. Etiquette (1) selon la revendication 11,
**caractérisée**
**en ce qu'**une partie des indications (18) forme les bandes (21) d'un code-barres susceptible d'être longueur utile de façon optique par une machine, généré par une technique d'impression, les bandes (21) étant séparées par des espaces de séparation situés entre celles-ci, exempts de couleur, et étant orientées parallèlement aux champs (4) et aux surfaces de séparation (5) du code-barres diffractif (3 ; 24 ; 26).

13. Etiquette (1) selon la revendication 11,
**caractérisée en ce que**
le code-barres généré par une technique d'impression est disposé sur le code-barres diffractif (3) et **en ce que** les espaces de séparation exempts de couleur sont visibles à travers au moins 30% de chaque champ (4) et de chaque surface de séparation (5) du code-barres diffractif (3).

14. Dispositif de lecture destiné à extraire optiquement des informations depuis une aire (2 ; 9 ; 25) sur une étiquette (1) selon l'une des revendications 1 à 13, constitué
a) d'un premier lecteur de code-barres (32) comprenant une fenêtre transparente (40), comprenant un faisceau d'extraction (34) sortant par la fenêtre (40) destiné à balayer optiquement une zone de lecture (35), comprenant un premier photodétecteur (37), qui est réglé pour recevoir la lumière (35) du faisceau d'extraction (34) rétrodispersée dans la zone de lecture (35), et comprenant un premier filtre de polarisation optique (39), disposé devant le premier photodétecteur (37), destiné à filtrer la lumière (35) rétrodispersée linéairement polarisée de façon non définie,
b) d'un second lecteur de code-barres (42) présentant une structure identique, comprenant la fenêtre transparente (40), comprenant une source de lumière inactive (44) et comprenant un second photodétecteur (43), le second lecteur de code-barres (42) étant réglé pour recevoir la lumière (35) du faisceau d'extraction (34) du premier lecteur de code-barres (32) rétrodispersée dans la zone de lecture (35), et comprenant un second filtre de polarisation optique (41) disposé devant le second photodétecteur (43), orienté de façon pivotante selon un angle prédéfini par rapport au premier filtre de polarisation optique (39), destiné à filtrer la lumière (35) rétrodispersée linéairement polarisée de façon non prédéfinie et
c) d'une première sortie (45) du premier photodétecteur (37) et d'une seconde sortie (46) du second photodétecteur (43), sur lesquelles apparaissent des signaux électriques proportionnels à l'intensité de la lumière (35) rétrodispersée sur les photodétecteurs (37 ; 43),
d) d'un analyseur de signaux (47), qui est relié à la première sortie (45) et à la seconde sortie (46), destiné à générer un code chiffré des photodétecteurs (37 ; 43) pour les signaux électriques transmis depuis la première sortie (45) et pour ceux transmis depuis la seconde sortie (46) à l'analyseur de signaux (47).

15. Dispositif de lecture selon la revendication 14,
**caractérisé**
**en ce qu'**un élément logique (48) est en outre présent, en ce qu'une entrée de l'élément logique (48) est reliée aux sorties (45 ; 46) et qu'une sortie de l'élément logique (48) est reliée par l'intermédiaire d'un circuit (49) à l'analyseur de signaux (47), en ce que l'élément logique (48), en l'absence simultanée des signaux électriques des deux photodétecteurs (37 ; 43) aux sorties (45 ; 46) délivre un signal de sortie par l'intermédiaire du circuit (49) à l'analyseur de signaux (47) pour générer un autre code chiffré.
